(19) Europäisches Patentamt
European Patent Office
Office européen des brevets

(11) **EP 3 671 768 A1**

(12) **DEMANDE DE BREVET EUROPEEN**

(43) Date de publication:
**24.06.2020 Bulletin 2020/26**

(51) Int Cl.:
*H01B 7/28* (2006.01)          *H01B 3/44* (2006.01)

(21) Numéro de dépôt: **19218500.7**

(22) Date de dépôt: **20.12.2019**

(84) Etats contractants désignés:
**AL AT BE BG CH CY CZ DE DK EE ES FI FR GB GR HR HU IE IS IT LI LT LU LV MC MK MT NL NO PL PT RO RS SE SI SK SM TR**
Etats d'extension désignés:
**BA ME**
Etats de validation désignés:
**KH MA MD TN**

(30) Priorité: **21.12.2018 FR 1873960**

(71) Demandeur: **Nexans**
**92400 Courbevoie (FR)**

(72) Inventeurs:
• **KOELBLIN, Christian**
  **01800 Meximieux (FR)**
• **PEREGO, Gabriele**
  **20144 Milan (IT)**

(74) Mandataire: **De Lamo Marin, Sandra et al**
**Ipsilon**
**Le Centralis**
**63, avenue du Général Leclerc**
**92340 Bourg-la-Reine (FR)**

(54) **CÂBLE ÉLECTRIQUE RÉSISTANT AUX ARBORESCENCES D'EAU**

(57) L'invention concerne un câble électrique comprenant au moins une couche électriquement isolante obtenue à partir d'une première composition comprenant au moins un polymère d'oléfine et au moins un polyalkylène glycol, et au moins une couche semi-conductrice obtenue à partir d'une deuxième composition comprenant au moins un polymère d'oléfine non polaire.

Fig. 1

**Description**

L'invention concerne un câble électrique comprenant au moins une couche électriquement isolante obtenue à partir d'une première composition comprenant au moins un polymère d'oléfine et au moins un polyalkylène glycol, et au moins une couche semi-conductrice obtenue à partir d'une deuxième composition comprenant au moins un polymère d'oléfine non polaire.

L'invention s'applique typiquement mais non exclusivement aux câbles électriques destinés au transport d'énergie, notamment aux câbles d'énergie à moyenne tension (notamment de 6 à 45-60 kV) ou à haute tension (notamment supérieure à 60 kV, et pouvant aller jusqu'à 400 kV), qu'ils soient en courant continu ou alternatif, dans les domaines du transport d'électricité aérien, sous-marin, terrestre, ou encore de l'aéronautique.

L'invention s'applique en particulier aux câbles électriques présentant une résistance améliorée au vieillissement en milieu humide sous tension électrique.

Les câbles d'énergie moyenne et haute tension peuvent être en contact avec l'humidité environnante pendant leur durée de vie. La présence de l'humidité combinée à la présence d'un champ électrique ainsi que d'un matériau polymère favorisent la dégradation progressive des propriétés isolantes du câble. Ce mécanisme de dégradation, bien connu sous les termes « croissance d'arborescences d'eau », peut ainsi mener au claquage du câble concerné et constitue donc une menace considérable pour la fiabilité du réseau de transport d'énergie avec des conséquences économiques bien connues engendrées par les défaillances de courant.

De nombreux composés de structures chimiques variées réduisant la formation d'arborescences d'eau ont été proposés dans des câbles à base de polyéthylène. En particulier, le document EP0223180A1 décrit une composition limitant ces arborescences d'eau, et destinée à être utilisée dans une couche électriquement isolante d'un câble électrique. Cette composition comprend un copolymère d'oligomère à base d'éthylène et d'un ester alpha-insaturé tel qu'un copolymère d'oligomère d'éthylène et d'acétate de vinyle, et un matériau polymère tel qu'un polyéthylène ou un polyvinyle acétal. Toutefois, même si cette composition permet de réduire les arborescences d'eau, elle n'est pas optimisée pour limiter de façon significative les dégradations liées aux arborescences d'eau. Par ailleurs, les copolymères d'éthylène et d'acétate de vinyle ne sont pas stables thermiquement, et peuvent par exemple se dégrader rapidement lors de la réticulation, notamment lorsqu'ils sont utilisés spécifiquement dans une couche électriquement isolante. Par ailleurs, même si cette composition permet de réduire les arborescences d'eau pour les couches électriquement isolantes, elle n'est pas optimisée pour être utilisée au sein d'un câble comprenant au moins une couche semi-conductrice (e.g. isolation bi- ou tricouche) dont tous les composants ont une influence importante sur la naissance et la croissance des arborescences d'eau. Les recherches entreprises dans le passé ont mené à de nombreuses compositions électriquement isolantes retardant la naissance et la croissance des arborescences d'eau. Ceci étant, l'influence des couches semi-conductrices sur la naissance et la croissance des arborescences d'eau n'a pas été réellement étudiée, et de ce fait les câbles bi- ou tricouches ne sont pas aujourd'hui optimisées pour limiter les dégradations liées à ces arborescences d'eau.

Le but de la présente invention est par conséquent de pallier les inconvénients des techniques de l'art antérieur en proposant un câble électrique bi- ou tricouches, notamment à moyenne ou haute tension, ledit câble présentant une résistance améliorée aux vieillissements, dans un environnement humide en présence d'un champ électrique, de préférence tout en garantissant de bonnes propriétés mécaniques.

Le but est atteint par l'invention qui va être décrite ci-après.

L'invention a pour premier objet un câble électrique comprenant au moins un élément électriquement conducteur allongé, au moins une couche électriquement isolante entourant ledit élément électriquement conducteur allongé, et au moins une couche semi-conductrice, caractérisé en ce que la couche électriquement isolante est obtenue à partir d'une première composition comprenant au moins un polymère d'oléfine et au moins un polyalkylène glycol, et en ce que la couche semi-conductrice est obtenue à partir d'une deuxième composition comprenant au moins un polymère d'oléfine non polaire.

Ainsi, grâce à la combinaison d'une couche électriquement isolante obtenue à partir d'une première composition comprenant au moins un polymère d'oléfine et au moins un polyalkylène glycol, et d'une couche semi-conductrice obtenue à partir d'une deuxième composition comprenant au moins un polymère d'oléfine non polaire, la résistance aux vieillissements, dans un environnement humide en présence d'un champ électrique, est améliorée de façon significative, de préférence tout en garantissant de bonnes propriétés mécaniques.

<u>La première composition</u>

<u>Le polyalkylène glycol</u>

La première composition permettant d'obtenir la couche électriquement isolante comprend au moins un polyalkylène glycol.

Le polyalkylène glycol est de préférence sous la forme solide à température ambiante (e.g. 18-25°C). Cela peut permettre une meilleure stabilité thermique, par exemple lors du procédé de fabrication de la couche électriquement isolante. En outre, la forme solide à température ambiante peut faciliter le transport et la mise en œuvre du polyalkylène glycol.

Le polyalkylène glycol peut avoir un poids moléculaire d'au moins 2000 g/mol, de préférence d'au moins 5000 g/mol environ, et de façon particulièrement préférée d'au moins 10000 g/mol environ.

Le polyalkylène glycol a de préférence un poids moléculaire d'au plus 50000 g/mol environ, et de façon particulièrement préférée d'au plus 30000 g/mol environ.

Le polyalkylène glycol peut être obtenu par polymérisation d'un ou plusieurs monomère(s) d'oxyde d'alkylène en présence d'eau et/ou d'un mono-, di- ou polyol, et d'un catalyseur, notamment selon des conditions bien connus de l'art antérieur.

Le polyalkylène glycol peut répondre à la formule (I) suivante :

$$H-[\{O-(CH_2)_u\}_x-\{O-(CH_2-CHR^1)_v\}_y]_w-OH \ (I),$$

dans laquelle $1 \leq u \leq 4$ ; $1 \leq v \leq 2$ ; $R^1$ est un groupe alkyle ayant de 1 à 3 atomes de carbone ; $0 \leq x \leq 1$ ; $0 \leq y \leq 1$ ; w est choisi de sorte que le poids moléculaire soit tel que défini dans l'invention ; x, y, z, u, v et w sont des nombres entiers, et au moins l'un parmi x et y est différent de zéro.

Le polyalkylène glycol est de préférence choisi parmi un polypropylène glycol ($x = 0$, $y = 1$, $R^1$ est un groupe méthyle, et $v = 1$), un polyéthylène glycol ($x = 1$, $y = 0$, et $u = 2$), ou un poly(éthylène-propylène) glycol ($x = 1$, $y = 1$, $R^1$ est un groupe méthyle, $u = 2$, et $v = 1$).

Selon une forme de réalisation particulièrement préférée de l'invention, le polyalkylène glycol est un polyéthylène glycol.

La première composition peut comprendre au moins 0,05% en poids environ, de préférence au moins 0,1% en poids environ, et de façon particulièrement préférée au moins 0,2% en poids environ de polyalkylène glycol, par rapport au poids total de la première composition.

La première composition peut comprendre au plus 5% en poids environ, de préférence au plus 1,5% en poids environ, et de façon particulièrement préférée au plus 1% en poids environ de polyalkylène glycol, par rapport au poids total de la première composition.

Le polymère d'oléfine

La première composition peut comprendre au moins 60% en poids environ, de préférence au moins 70% en poids environ, et de façon particulièrement préférée au moins 90% en poids environ de polymère d'oléfine, par rapport au poids total de la première composition.

La première composition peut comprendre au plus 98,5% en poids environ, de préférence au plus 90% en poids environ, et de façon particulièrement préférée au plus 85% en poids environ de polymère d'oléfine, par rapport au poids total de la première composition.

Le polymère d'oléfine de la première composition est un homopolymère ou copolymère d'oléfine.

Dans un mode de réalisation particulier, le polymère d'oléfine est un polymère d'une oléfine choisie parmi les oléfines en $C_2$-$C_{12}$, de préférence les oléfines en $C_2$-$C_{10}$, de façon particulièrement préférée les oléfines en $C_2$-$C_8$, et de façon plus particulièrement préférée est un polymère d'éthylène.

L'oléfine est de préférence une alpha-oléfine.

Le polymère d'oléfine de la première composition peut être un homopolymère ou copolymère d'oléfine non polaire (première variante telle que détaillée ci-dessous), éventuellement associé à un copolymère d'oléfine et d'un co-monomère polaire ; ou un copolymère d'oléfine et d'un co-monomère polaire (deuxième variante telle que détaillée ci-dessous).

Selon une forme de réalisation préférée de l'invention, la première composition comprend au moins 2% en poids environ, de préférence au moins 5% en poids environ, et de façon particulièrement préférée au moins 10% en poids environ d'un copolymère d'oléfine et d'un co-monomère polaire, par rapport au poids total de la première composition (e.g. en tant que polymère d'oléfine de la première composition ou en tant que polymère utilisé en combinaison avec le polymère d'oléfine de la première composition).

Selon une première variante, le polymère d'oléfine de la première composition est un homopolymère ou copolymère d'oléfine non polaire, et de préférence un homopolymère d'oléfine non polaire.

Dans la présente invention, l'expression « non polaire » signifie que le polymère de ce type ne comporte pas de fonctions polaires, telles que par exemple des groupements acétate, acrylate, hydroxyle, nitrile, carboxyle, carbonyle, éther, ester, ou tous autres groupements à caractère polaire bien connus dans l'art antérieur. Par exemple, un polymère non polaire est différent d'un polymère comprenant un ou plusieurs monomères polaires, tels que ceux choisis parmi les copolymères d'éthylène du type copolymère d'éthylène et d'acétate de vinyle (EVA), copolymère d'éthylène et de butyle acrylate (EBA), copolymère d'éthylène et d'éthyle acrylate (EEA), copolymère d'éthylène et d'acrylate de méthyle (EMA), ou copolymère d'éthylène et d'acide acrylique (EAA).

Selon cette première variante, l'homo- ou copolymère d'oléfine non polaire peut être un copolymère d'éthylène et d'une oléfine en $C_3$-$C_{12}$, de préférence en $C_3$-$C_{10}$, et de façon particulièrement préférée en $C_3$-$C_8$ ; ou un homopolymère d'éthylène.

Selon cette première variante, un polyéthylène basse densité est plus particulièrement préféré.

Selon cette première variante, la première composition peut comprendre en outre un copolymère d'oléfine et d'un co-monomère polaire. La présence d'un copolymère d'oléfine et d'un co-monomère polaire peut permettre avantageusement d'améliorer la résistance au vieillissement en milieu humide sous tension électrique.

Dans la présente invention, l'expression « polaire » signifie un polymère comprenant des fonctions polaires, en particulier des groupements acétate, acrylate, hydroxyle, nitrile, carboxyle, carbonyle, éther, ester, ou tous autres groupements à caractère polaire bien connus dans l'art antérieur.

Ledit co-monomère peut représenter au moins 1% en poids environ, de préférence au moins 1,5% en poids environ, et de façon particulièrement préférée au moins 2% environ, par rapport au poids total de polymère(s) présent(s) dans la première composition.

Dans la présente invention, le poids total de polymère(s) dans la première composition ne comprend pas le poids du polyalkylène glycol.

Ledit co-monomère peut représenter au plus 10% en poids environ, de préférence au plus 8% en poids environ, et de façon particulièrement préférée au plus 6% environ, par rapport au poids total de polymère(s) présent(s) dans la première composition.

Le copolymère d'oléfine et d'un co-monomère polaire peut être choisi parmi les copolymères d'une oléfine en $C_2$-$C_{12}$, de préférence en $C_2$-$C_{10}$, de façon particulièrement préférée en $C_2$-$C_8$, et de façon plus particulièrement préférée en $C_2$ (copolymère d'éthylène) ; et d'un co-monomère polaire.

Dans un mode de réalisation, le co-monomère polaire est choisi parmi les acrylates, de préférence les acrylates d'alkyle comprenant de 1 à 10 atomes de carbone, de façon particulièrement préférée les acrylates de méthyle, éthyle, 2-hexyléthyle, ou butyle, et de façon plus particulièrement préférée les acrylates de butyle.

Selon une forme de réalisation particulièrement préférée de cette première variante, le copolymère d'oléfine et d'un co-monomère polaire est un copolymère d'éthylène et d'acrylate d'alkyle, ou avantageusement un copolymère d'éthylène et d'acrylate de butyle.

Selon cette première variante, la première composition comprend plus particulièrement de 70% à 90% en poids environ dudit homopolymère ou copolymère d'oléfine non polaire, et de 10% à 30% en poids environ dudit copolymère d'oléfine et d'un co-monomère polaire.

Selon une deuxième variante, le polymère d'oléfine de la première composition est un copolymère d'oléfine et d'un co-monomère polaire. La présence d'un copolymère d'oléfine et d'un co-monomère polaire peut permettre avantageusement d'améliorer la résistance au vieillissement en milieu humide sous tension électrique.

Ledit co-monomère peut représenter au moins 1% en poids environ, de préférence au moins 1,5% en poids environ, et de façon particulièrement préférée au moins 2% environ, par rapport au poids total dudit copolymère d'oléfine et d'un co-monomère polaire.

Ledit co-monomère peut représenter au plus 10% en poids environ, de préférence au plus 8% en poids environ, et de façon particulièrement préférée au plus 6% environ, par rapport au poids total dudit copolymère d'oléfine et d'un co-monomère polaire.

Le copolymère d'oléfine et d'un co-monomère polaire peut être choisi parmi les copolymères d'une oléfine en $C_2$-$C_{12}$, de préférence en $C_2$-$C_{10}$, de façon particulièrement préférée en $C_2$-$C_8$, et de façon plus particulièrement préférée en $C_2$ (copolymère d'éthylène); et d'un co-monomère polaire.

Dans un mode de réalisation, le co-monomère polaire est choisi parmi les acrylates, de préférence les acrylates d'alkyle comprenant de 1 à 10 atomes de carbone, de façon particulièrement préférée les acrylates de méthyle, éthyle, 2-hexyléthyle, ou butyle, et de façon plus particulièrement préférée les acrylates de butyle.

Selon une forme de réalisation particulièrement préférée de cette deuxième variante, le copolymère d'oléfine et d'un co-monomère polaire est un copolymère d'éthylène et d'acrylate d'alkyle, ou avantageusement un copolymère d'éthylène et d'acrylate de butyle.

Selon cette deuxième variante, la première composition comprend plus particulièrement de 80% à 98,5% en poids environ dudit copolymère d'oléfine et d'un co-monomère polaire.

La première composition peut comprendre au moins 50% en poids environ, de préférence au moins 80% en poids environ, et de façon particulièrement préférée au moins 95% en poids environ de polymère(s), par rapport au poids total de la première composition. Dans la présente invention, le poids total de polymère(s) dans la première composition ne comprend pas le poids du polyalkylène glycol.

Le copolymère d'oléfine et d'un co-monomère polaire de l'invention est de préférence différent d'un EVA. Cela peut par exemple permettre d'éviter la dégradation thermique de la couche électriquement isolante.

La couche électriquement isolante

Dans la présente invention, on entend par « couche électriquement isolante » une couche dont la conductivité électrique peut être d'au plus $1.10^{-8}$ S/m (siemens par mètre), de préférence d'au plus $1.10^{-9}$ S/m, et de façon particulièrement préférée d'au plus $1.10^{-10}$ S/m (siemens par mètre), mesurée à 25°C en courant continu.
La couche électriquement isolante est de préférence une couche réticulée. La couche électriquement isolante réticulée permet d'avoir des propriétés mécaniques améliorées, et de ce fait, la température maximale de fonctionnement du câble s'en trouvera augmentée.
Dans la présente invention, l'expression « couche réticulée » signifie une couche dont le taux de gel selon la norme ASTM D2765-01 (extraction au xylène) est d'au moins 40% environ, de préférence d'au moins 50% environ, de préférence d'au moins 60% environ, de façon particulièrement préférée d'au moins 70% environ, et de façon plus particulièrement préférée d'au moins 80% environ.
Par conséquent, la première composition est de préférence réticulable.
La première composition peut comprendre en outre au moins un agent de réticulation.
L'agent de réticulation peut être choisi parmi les peroxydes organiques, les silanes et/ou tout autre agent de réticulation approprié pour la réticulation de polyoléfines.
À titre d'exemples de peroxydes organiques, on peut citer les peroxydes du type tert-Butylcumyl peroxyde ou du type dicumyl peroxyde, le 2,5-diméthyl-2,5-di(tert-butylperoxy)hexyne-3, ou le 1,3 et 1,4-Bis (tert-butylperoxyisopropyl)benzène.
La première composition peut typiquement comprendre de 0,5 à 2,5% en poids environ, et de préférence de 1,3 à 2,0% en poids environ d'agent de réticulation, par rapport au poids total de la première composition.
La première composition peut comprendre en outre un ou plusieurs additifs.
Les additifs sont bien connus de l'homme du métier et peuvent être choisis parmi des agents favorisant la mise en œuvre tels que des lubrifiants, des agents compatibilisants, des agents de couplage, des stabilisants, des composés réduisant les arborescences d'eau, des antioxydants, des pigments, des charges électriquement non-conductrices, des charges minérales sans halogène destinées à améliorer le comportement au feu de la couche électriquement isolante, et un de leurs mélanges.
La première composition peut typiquement comprendre de 0,01 à 5% en poids environ, et de préférence de 0,1 à 2% en poids environ d'additif(s), par rapport au poids total de la première composition.
Les antioxydants sont choisis de préférence parmi les phénols encombrés, les antioxydants à base de soufre, les antioxydants à base de phosphore, les antioxydants de type amine, et un de leurs mélanges.
À titre d'exemples de phénols encombrés, on peut citer le Pentaérythritol tétrakis(3-(3,5-di-*tert*-butyl-4-hydroxyphényl)propionate) (Irganox® 1010), l'octadécyl 3-(3,5-di-*tert*-butyl-4-hydroxyphényl)propionate (Irganox® 1076), le 1,3,5-triméthyl-2,4,6-tris(3,5-di-*tert*-butyl-4-hydroxybenzyl)benzène (Irganox® 1330), le 4,6-bis (octylthiométhyl)-o-crésol (Irgastab® KV10 ou Irganox® 1520), le 2,2'-thiobis(6-*tert*-butyl-4-méthylphénol) (Irganox® 1081), le 2,2'- thiodiéthylène bis[3-(3,5-di-tert-butyl-4-hydroxyphényl) propionate] (Irganox® 1035), le 2,2'-méthylènebis(6-*tert*-butyl-4-méthylphénol), le 1,2-bis(3,5-di-tert-butyl-4-hydroxyhydrocinnamoyl) hydrazine (Irganox® MD 1024), le tris (3,5-di-*tert*-butyl-4-hydroxybenzyl) isocyanurate (Irganox® 3114), ou le 2,2'-oxamido-bis(éthyl-3(3,5-di-*tert*-butyl-4-hydroxyphényle)propionate).
À titre d'exemples d'antioxydants à base de soufre, on peut citer les thioéthers tels que le didodécyl-3,3'-thiodipropionate (Irganox® PS800), le distéaryl thiodipropionate ou dioctadecyl-3,3'-thiodipropionate (Irganox® PS802), le bis[2-méthyle-4-{3-n-alkyle ($C_{12}$ ou $C_{14}$) thiopropionyloxy}-5-*tert*-butylphényl]sulfide, le thiobis-[2-*tert*-butyl-5-méthyle-4,1-phénylène] bis [3-(dodécylthio)propionate], ou le 4,6-bis(octylthiométhyle)-o-crésol (Irganox® 1520 ou Irgastab® KV10).
À titre d'exemples d'antioxydants à base de phosphore, on peut citer les phosphites ou les phosphonates, tels que le tris(2,4-di-*tert*-butyl-phényle)phosphite (Irgafos® 168) ou le bis(2,4-di-*tert*-butylphényl)pentaérythritol diphosphite (Ultranox® 626).
À titre d'exemples d'antioxydants de type amine, on peut citer les phénylène diamines (e.g. paraphénylènes diamines tels que 1PPD ou 6PPD), les diphénylamine styrène, les diphénylamines, le 4-(1-méthyl-1-phényléthyl)-N-[4-(1-méthyl-1-phényléthyl)phényl]aniline (Naugard 445), les mercapto benzimidazoles, ou le 2,2,4-triméthyl-1,2 dihydroquinoline polymérisé (TMQ).
La couche électriquement isolante du câble de l'invention peut comprendre au moins un polymère d'oléfine, au moins un polyalkylène glycol, et éventuellement un ou plusieurs additifs, les ingrédients précités étant tels que définis dans l'invention.
Les proportions des différents ingrédients dans la couche électriquement isolante peuvent être identiques à celles telles que décrites dans l'invention pour ces mêmes ingrédients dans la première composition.

La couche électriquement isolante du câble de l'invention est de préférence une couche extrudée, notamment par des techniques bien connues de l'homme du métier.

Dans un mode de réalisation de l'invention, la couche électriquement isolante présente une tension de claquage après vieillissement en milieu humide d'au moins 28 kV/mm environ, de préférence d'au moins 30 kV/mm environ, de façon particulièrement préférée d'au moins 35 kV/mm environ, et de façon plus particulièrement préférée d'au moins 40 kV/mm environ.

La tension de claquage après vieillissement en milieu humide est mesurée par un test sur câble réel de longue durée en milieu humide et sous champs électrique, par exemple d'une durée de 1 an ou 2 ans, bien connu de l'homme de métier sous le nom «Test CENELEC » selon la norme HD 605, S2:2008, paragraphe 5.4.15.3.

Dans un mode de réalisation particulièrement préféré de l'invention, la couche électriquement isolante présente une réduction de la tension de claquage après vieillissement en milieu humide d'au plus 50% environ, de préférence d'au plus 45% environ, de façon particulièrement préférée d'au plus 40% environ, et de façon plus particulièrement préférée d'au plus 30% environ.

## La deuxième composition

### La charge conductrice

La deuxième composition comprend en particulier au moins une charge conductrice, notamment en quantité suffisante pour rendre la couche semi-conductrice.

La deuxième composition peut comprendre au moins 6% en poids environ de charge conductrice, de préférence au moins 10% en poids environ de charge conductrice, préférentiellement au moins 15% en poids environ de charge conductrice, et encore plus préférentiellement au moins 25% en poids environ de charge conductrice, par rapport au poids total de la deuxième composition.

La deuxième composition peut comprendre au plus 45% en poids environ de charge conductrice, et de préférence au plus 40% en poids environ de charge conductrice, par rapport au poids total de la deuxième composition.

La charge conductrice est de préférence une charge électriquement conductrice.

La charge conductrice peut être choisie avantageusement parmi les noirs de carbone, les graphites, et un de leurs mélanges.

### Le polymère d'oléfine non polaire

Le polymère d'oléfine non polaire de la deuxième composition est choisi parmi les homo- et les copolymères d'une oléfine choisie parmi les oléfines en $C_2$-$C_{12}$, de préférence les oléfines en $C_2$-$C_{10}$, de façon particulièrement préférée les oléfines en $C_2$-$C_8$, et de façon plus particulièrement préférée est un polymère d'éthylène.

L'oléfine est de préférence une alpha-oléfine.

Plus particulièrement, la deuxième composition comprend au moins un polymère d'oléfine non polaire choisi parmi les polymères d'éthylène, les polymères de propylène, et un de leurs mélanges, et de préférence parmi les polymères d'éthylène (i.e. les homo- et les copolymères d'éthylène).

À titre d'exemples de polymères d'éthylène, on peut citer un polyéthylène linéaire basse densité (LLDPE), un polyéthylène basse densité (LDPE), un polyéthylène très basse densité (VLDPE), un polyéthylène moyenne densité (MDPE), un polyéthylène haute densité (HDPE), les copolymères d'éthylène et d'alpha-oléfines tels que par exemple les polyéthylène-octène (PEO), les copolymères d'éthylène et de propylène (EPR), les terpolymères d'éthylène et de propylène (EPT) tels que par exemple les terpolymères d'éthylène propylène diène monomère (EPDM), ou un de leurs mélanges.

Dans la présente invention, l'expression « basse densité » signifie une densité allant de 0,91 à 0,925 environ, ladite densité étant mesurée selon la norme ISO 1183A (à une température de 23°C).

Dans la présente invention, l'expression « très basse densité » signifie une densité allant de 0,850 à 0,909 environ, ladite densité étant mesurée selon la norme ISO 1183A (à une température de 23°C).

Dans la présente invention, l'expression « moyenne densité » signifie une densité allant de 0,926 à 0,940 environ, ladite densité étant mesurée selon la norme ISO 1183A (à une température de 23°C).

Dans la présente invention, l'expression « haute densité » signifie une densité allant de 0,941 à 0,965, ladite densité étant mesurée selon la norme ISO 1183A (à une température de 23°C).

Selon une forme de réalisation préférée de l'invention, le polymère d'oléfine non polaire est choisi parmi un LDPE, un VLDPE, un LLDPE, un PEO, et un de leurs mélanges.

Selon un mode de réalisation de l'invention, la deuxième composition comprend au moins 50% en poids environ, et de préférence au moins 60% en poids environ, du polymère d'oléfine non polaire, par rapport au poids total de la deuxième composition.

Selon un mode de réalisation de l'invention, la deuxième composition comprend au plus 85% en poids environ, et de préférence au plus 75% en poids environ, du polymère d'oléfine non polaire, par rapport au poids total de la deuxième composition.

La deuxième composition du câble de l'invention peut comprendre au moins 50% en poids environ, de préférence au moins 60% en poids environ, et de façon particulièrement préférée au moins 65% en poids environ de polymère(s), par rapport au poids total de la deuxième composition.

Selon une forme de réalisation préférée de l'invention, la deuxième composition comprend au moins 60% en poids environ, préférentiellement au moins 80% en poids environ, et plus préférentiellement au moins 95% en poids environ de polymère(s) non polaire(s), par rapport au poids total de la deuxième composition.

La deuxième composition peut comprendre au plus 10% en poids environ, préférentiellement au plus 7,5% en poids environ, et plus préférentiellement au plus 5% en poids environ de polymère(s) polaire(s), par rapport au poids total de la deuxième composition.

La couche semi-conductrice

Selon une forme de réalisation particulièrement préférée de l'invention, la couche semi-conductrice est une couche réticulée. La couche semi-conductrice réticulée permet d'avoir des propriétés mécaniques améliorées, et de ce fait, la température maximale de fonctionnement du câble s'en trouvera augmentée.

Par conséquent, la deuxième composition est de préférence réticulable.

La deuxième composition peut comprendre en outre au moins un agent de réticulation.

L'agent de réticulation peut être choisi parmi les peroxydes organiques, les silanes et/ou tout autre agent de réticulation approprié pour la réticulation de polyoléfines.

À titre d'exemples de peroxydes organiques, on peut citer les peroxydes du type tert-Butylcumyl peroxyde ou du type dicumyl peroxyde, le 2,5-diméthyl-2,5-di(tert-butylperoxy)hexyne-3, ou le 1,3 et 1,4-Bis (tert-butylperoxyisopropyl)benzène.

La deuxième composition peut typiquement comprendre de 0,3 à 2,0% en poids environ, et de préférence de 0,5 à 1,5% en poids environ d'agent de réticulation, par rapport au poids total de la deuxième composition.

La deuxième composition peut comprendre en outre un ou plusieurs additifs.

Les additifs sont bien connus de l'homme du métier et peuvent être choisis parmi des agents favorisant la mise en œuvre tels que des lubrifiants, des agents compatibilisants, des agents de couplage, des stabilisants, des composés réduisant les arborescences d'eau, des antioxydants, des pigments, des charges électriquement non-conductrices, des charges minérales sans halogène destinées à améliorer le comportement au feu de la couche semi-conductrice, et un de leurs mélanges.

Les antioxydants peuvent être tels que définis dans l'invention.

La deuxième composition peut typiquement comprendre de 0,01 à 5% en poids environ, et de préférence de 0,1 à 2% en poids environ d'additif(s), par rapport au poids total de la première composition.

Dans la présente invention, on entend par « couche semi-conductrice » une couche dont la conductivité électrique peut être strictement supérieure à $1.10^{-8}$ S/m (Siemens par mètre), de préférence d'au moins $1.10^{-3}$ S/m, et de préférence peut être inférieure à $1.10^{3}$ S/m, mesurée à 25°C en courant continu.

La couche semi-conductrice a plus particulièrement une conductivité électrique supérieure à celle de la couche électriquement isolante. Plus particulièrement, la conductivité électrique de la couche électriquement isolante peut être au moins 10 fois inférieure à la conductivité électrique de la couche semi-conductrice, de préférence au moins 100 fois inférieure à la conductivité électrique de la couche semi-conductrice, et de façon particulièrement préférée au moins 1000 fois inférieure à la conductivité électrique de la couche semi-conductrice.

La couche semi-conductrice du câble de l'invention peut comprendre au moins un polymère d'oléfine non polaire, éventuellement une charge conductrice, et éventuellement un ou plusieurs additifs, les ingrédients précités étant tels que définis dans l'invention.

Les proportions des différents ingrédients dans la couche semi-conductrice peuvent être identiques à celles telles que décrites dans l'invention pour ces mêmes ingrédients dans la deuxième composition.

La couche semi-conductrice du câble de l'invention est de préférence une couche extrudée, notamment par des techniques bien connues de l'homme du métier.

Le câble

L'élément électriquement conducteur allongé de l'invention peut être du type monobrins ou multibrins. De préférence, ledit élément électriquement conducteur allongé est en cuivre, en alliage de cuivre, en aluminium, ou en alliage d'aluminium.

La couche semi-conductrice entoure de préférence l'élément électriquement conducteur allongé.

La couche électriquement isolante peut entourer ladite couche semi-conductrice du câble de l'invention. La couche semi-conductrice peut alors être une couche semi-conductrice interne.

La couche semi-conductrice peut entourer ladite couche électriquement isolante du câble de l'invention. La couche semi-conductrice peut alors être une couche semi-conductrice externe.

La couche semi-conductrice est de préférence une couche semi-conductrice interne.

Le câble électrique de l'invention peut en outre comprendre une autre couche semi-conductrice.

Ainsi, dans ce mode de réalisation, le câble de l'invention peut comprendre au moins un élément électriquement conducteur allongé, notamment positionné au centre du câble :

- entouré par une première couche semi-conductrice,

- la première couche semi-conductrice étant entourée une couche électriquement isolante, ou en d'autres termes entourée par ladite couche électriquement isolante de l'invention, et

- la couche électriquement isolante étant entourée par une deuxième couche semi-conductrice,

au moins l'une desdites première et deuxième couches semi-conductrices de ce mode de réalisation étant la couche semi-conductrice telle que décrite dans la présente invention, et de préférence lesdites première et deuxième couches semi-conductrices de ce mode de réalisation étant la couche semi-conductrice telle que décrite dans la présente invention.

Ainsi, la première couche semi-conductrice, la couche électriquement isolante et la deuxième couche semi-conductrice constituent une isolation tricouche. Plus particulièrement, la première couche semi-conductrice est directement en contact physique avec la couche électriquement isolante, et la deuxième couche semi-conductrice est directement en contact physique avec la couche électriquement isolante.

Le câble électrique de l'invention peut comprendre en outre un écran métallique entourant la couche semi-conductrice du câble de l'invention, la couche semi-conductrice du câble de l'invention étant celle qui entoure la couche électriquement isolante.

Cet écran métallique peut être un écran dit « filaire », composé d'un ensemble de conducteurs en cuivre ou aluminium arrangé autour et le long du de la couche semi-conductrice, un écran dit « rubané » composé d'un ou de plusieurs rubans métalliques conducteurs posé(s) en hélice autour de la couche semi-conductrice, ou d'un écran dit « étanche » de type tube métallique entourant la couche semi-conductrice. Ce dernier type d'écran permet notamment de faire barrière à l'humidité ayant tendance à pénétrer le câble électrique en direction radiale.

Tous les types d'écran métalliques peuvent jouer le rôle de mise à la terre du câble électrique et peuvent ainsi transporter des courants de défaut, par exemple en cas de court-circuit dans le réseau concerné.

En outre, le câble électrique de l'invention peut comprendre une gaine extérieure de protection entourant la deuxième couche semi-conductrice, ou bien entourant plus particulièrement ledit écran métallique lorsqu'il existe. Cette gaine extérieure de protection peut être réalisée classiquement à partir de matériaux thermoplastiques appropriées tels que des HDPE, des MDPE ou des LLDPE ; ou encore des matériaux retardant la propagation de la flamme ou résistant à la propagation de la flamme. Notamment, si ces derniers matériaux ne contiennent pas d'halogène, on parle de gainage de type HFFR (pour l'anglicisme « *Halogen Free Flame Retardant* »).

D'autres couches, telles que des couches gonflantes en présence d'humidité, peuvent être ajoutées entre la deuxième couche semi-conductrice et l'écran métallique lorsqu'il existe, et/ou entre l'écran métallique et la gaine extérieure lorsqu'ils existent, ces couches permettant d'assurer l'étanchéité longitudinale du câble électrique à l'eau. Le conducteur électrique du câble de l'invention peut également comprendre des matières gonflantes en présence d'humidité pour obtenir une « âme étanche ».

Afin de garantir un câble électrique dit « HFFR » pour l'anglicisme « *Halogen Free Flame Retardant* », le câble de l'invention ne comprend préférentiellement pas de composés halogénés. Ces composés halogénés peuvent être de toutes natures, tels que par exemple des polymères fluorés ou des polymères chlorés comme le polychlorure de vinyle (PVC), des plastifiants halogénés, des charges minérales halogénées, ...etc.

Le câble électrique peut être préparé par extrusion desdites première et deuxième compositions autour dudit élément électriquement conducteur allongé, pour obtenir des couches extrudées, et par réticulation desdites couches extrudées.

L'extrusion peut être réalisée par des techniques bien connues de l'homme du métier, à l'aide d'une extrudeuse.

Lors de l'extrusion, les première et deuxième compositions en sortie d'extrudeuse sont dites « non réticulées », la température ainsi que le temps de mise en œuvre au sein de l'extrudeuse étant optimisés en conséquent.

En sortie d'extrudeuse, on obtient donc des couches extrudées autour dudit élément électriquement conducteur, pouvant être ou non, directement en contact physique avec ledit élément électriquement conducteur.

Les extrusions desdites première et deuxième compositions pour former respectivement les couches électriquement isolante et semi-conductrice peuvent être réalisées séparément ou concomitamment. En particulier, les couches électriquement isolante et semi-conductrice peuvent être obtenues par extrusion successive ou par co-extrusion.

Préalablement à l'extrusion de ces couches autour dudit élément électriquement conducteur allongé, l'ensemble des constituants polymères et le polyalkylène glycol nécessaires à la formation de chacune de ces couches, peuvent être dosés et mélangés dans un mélangeur en continu de type co-malaxeur BUSS, extrudeuse bi-vis ou un autre type de mélangeur approprié pour des mélanges polymères, notamment chargés. Le mélange résultant peut être ensuite extrudé sous forme de joncs, puis refroidi et séché pour être mis sous forme de granulés, ou alors le mélange peut être mis directement sous forme de granulés, par des techniques bien connues de l'homme du métier. Ces granulés peuvent être ensuite imprégnés d'un ou plusieurs additifs tels que définis dans l'invention ainsi que de l'agent de réticulation, puis séchés, et introduits au sein d'une extrudeuse mono-vis, afin d'extruder la couche en question.

Les différentes compositions peuvent être extrudées les unes à la suite des autres pour entourer de façon successive l'élément électriquement conducteur allongé, et ainsi former les différentes couches du câble électrique de l'invention.

Elles peuvent alternativement être extrudées concomitamment par co-extrusion à l'aide d'une unique tête d'extrudeuse, la co-extrusion étant un procédé bien connu de l'homme du métier.

Que ce soit dans l'étape de formation des granulés ou dans l'étape d'extrusion sur câble, les conditions opératoires sont bien connues de l'homme du métier. Notamment, la température au sein du dispositif de mélange ou d'extrusion peut être supérieure à la température de fusion du polymère majoritaire ou du polymère ayant la température de fusion la plus élevée, parmi les polymères utilisés dans la composition à mettre en œuvre.

Typiquement, une fois les première et deuxième compositions de l'invention mises en œuvre autour de l'élément électriquement conducteur allongé, par extrusion, la réticulation peut s'effectuer par voie thermique, par exemple à l'aide d'une ligne continue de vulcanisation (« CV line »), d'un tube vapeur, d'un bain de sel fondu, d'un four ou d'une chambre thermique, ces techniques étant bien connues de l'homme du métier.

La réticulation dans un tube vapeur ou un tube azote de vulcanisation, à une température pouvant être comprise entre 250 et 400°C environ, est préférée.

Les première et deuxième compositions peuvent être réticulées par des techniques bien connues de l'homme du métier, telle que la réticulation par voie peroxyde, la réticulation silane, ou la réticulation par irradiation notamment par faisceau d'électron (rayonnement béta).

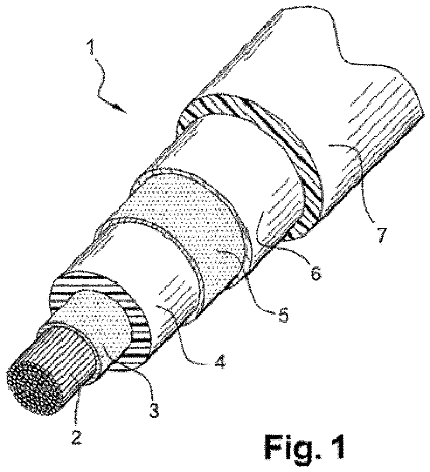

D'autres caractéristiques et avantages de la présente invention apparaîtront à la lumière de la description d'un exemple non limitatif d'un câble électrique selon l'invention fait en référence à la figure 1 représentant une vue schématique en perspective et en coupe d'un câble électrique selon un mode de réalisation préféré conforme à l'invention.

Pour des raisons de clarté, seuls les éléments essentiels pour la compréhension de l'invention ont été représentés de manière schématique, et ceci sans respect de l'échelle.

Le câble est un câble d'énergie 1 à moyenne ou haute tension, illustré dans la figure 1, et il comprend un élément électriquement conducteur 2 central allongé, notamment en cuivre ou en aluminium, et, successivement et coaxialement comprend autour de cet élément 2, une première couche semi-conductrice 3 dite « couche semi-conductrice interne », une couche électriquement isolante 4, une deuxième couche semi-conductrice 5 dite « couche semi-conductrice externe », un écran métallique 6 du type tube cylindrique, et une gaine extérieure de protection 7.

La couche semi-conductrice 3 et/ou 5 de la figure 1 est une couche semi-conductrice selon l'invention.

La couche électriquement isolante 4 de la figure 1 est une couche électriquement isolante selon l'invention.

Dans le câble de la figure 1, les couches 3, 4 et 5 sont typiquement des couches polymères extrudées.

La présence de l'écran métallique 6 et de la gaine extérieure de protection 7 est préférentielle, mais non essentielle, cette structure de câble étant en tant que telle bien connue de l'homme du métier.

## EXEMPLE

### 1. Compositions polymères

Une première composition **I1** conforme à l'invention, i.e. comprenant au moins un polyalkylène glycol et au moins un polymère d'oléfine a été comparée à une composition **C1** comparative, la composition **C1** correspondant à une composition comprenant au moins un polymère d'oléfine identique à celui utilisé pour la composition de l'invention **I1**, mais ne comprenant pas de polyalkylène glycol.

Le tableau 1 ci-dessous rassemble les compositions polymères **I1** et **C1** dont les quantités des composés sont exprimées en pourcentages en poids, par rapport au poids total de la composition.

**TABLEAU 1**

| Première composition | C1 (*) | I1 |
|---|---|---|
| Polymère d'oléfine | 98,23 | 78,28 |

(suite)

| Première composition | C1 (*) | I1 |
|---|---|---|
| Polyalkylène glycol | 0,0 | 0,4 |
| Copolymère d'oléfine et d'un co-monomère polaire | 0,0 | 19,6 |
| Antioxydant | 0,22 | 0,21 |
| Peroxyde organique | 1,55 | 1,51 |
| Total Ingrédients première composition | 100 | 100 |
| (*) Composition comparative ne faisant pas partie de l'invention | | |

L'origine des composés du tableau 1 est la suivante :

- polymère d'oléfine : polyéthylène basse densité commercialisé par la société INEOS sous la référence BPD 2000 ;

- polyalkylène glycol : polyéthylène glycol de poids moléculaire 20000 g/mol commercialisé par la société CLARIANT sous la référence PEG 20000 SRU ;

- copolymère d'oléfine et d'un co-monomère polaire : copolymère d'éthylène et d'acrylate de butyle ayant une teneur massique moyenne d'acrylate de butyle de 16%, commercialisé par la société LUCOBIT sous la référence Lucofin 1400 HN ;

- antioxydant : 4,6-bis (octylthiométhyl)-o-crésol commercialisé par la société BASF sous la référence Irgastab KV 10 ; et

- peroxyde organique : tert-butyl cumyl peroxyde commercialisé par la société NOURYON sous la référence Trigonox T.

2. Préparation des couches réticulées et des câbles

Les compositions rassemblées dans le tableau 1 sont mises en œuvre comme suit.

Les constituants suivants : l'antioxydant et le peroxyde organique des compositions **C1** et **I1** référencées dans le tableau 1, pour chaque couche à considérer, sont dosés et mélangés sous agitation, afin de former un mélange liquide.

La composition **C1** est ensuite obtenue par un procédé d'imprégnation tel que décrit ci-dessous. Les granulés de polymère d'oléfine sont réchauffés à une température d'environ 60°C dans un récipient fermé. Ensuite, le mélange liquide correspondant est dosé, ajouté aux granulés, et le récipient est mis en mouvement (de préférence un mouvement de rotation) afin de garantir un enrobage régulier des granulés. Le mélange liquide est absorbé par les granulés après une durée de mise en mouvement pouvant varier entre 15 et 60 minutes. Après cette étape, on laisse refroidir les granulés et on obtient des granulés parfaitement secs à la surface que l'on peut stocker en vue de leur utilisation dans une extrudeuse.

Pour obtenir la composition **I1**, le polymère d'oléfine, le polyalkylène glycol et le copolymère d'oléfine et d'un co-monomère polaire sont dosés chacun dans une extrudeuse à double vis (« Berstorff twin screw extruder »), et soumis à une température de 120 à 160°C environ, pour être mis en fusion et être homogénéisés par le mouvement de deux vis (vitesse des vis : 80 tours/min). Le mélange fondu ainsi obtenu est transformé en joncs continus, qui sont refroidis et ensuite mis sous la forme de granulés.

Ensuite, les granulés sont soumis à un procédé d'imprégnation tel que décrit ci-dessus pour la composition **C1**, afin d'imprégner lesdits granulés par le mélange liquide comprenant le peroxyde et l'antioxydant. On obtient des granulés parfaitement secs, stockables et utilisables pour une utilisation dans une extrudeuse.

Le procédé d'imprégnation de granulés de polymère par le mélange liquide permet notamment d'ajouter le peroxyde postérieurement à la formation des granulés, et ainsi d'éviter que le peroxyde commence à réticuler le polymère fondu et forme un gel de polymère (phénomène dénommé grillage ou selon l'anglicisme « scorch ». En particulier, il est préférable que le peroxyde soit introduit dans une phase de procédé où les températures ne sont pas trop élevées.

Deux câbles **Cc1** et **Ci1** sont fabriqués sur une ligne industrielle d'extrusions de câbles moyenne tension (appelée aussi « ligne VC, chaînette »). Chacun des câbles **Cc1** et **Ci1** comprend :

- un élément électriquement conducteur allongé d'une section de 95 mm$^2$,

- une première couche semi-conductrice obtenue à partir de la deuxième composition de l'invention, ladite première couche semi-conductrice entourant ledit élément électriquement conducteur allongé,

- une couche électriquement isolante obtenue à partir de la première composition de l'invention **C1** ou d'une composition comparative **I1**, ladite couche électriquement isolante entourant ladite première couche semi-conductrice, et

- une deuxième couche semi-conductrice obtenue à partir de la deuxième composition de l'invention, ladite deuxième couche semi-conductrice entourant ladite couche électriquement isolante.

Les câbles ont un diamètre total extérieur de 30 mm environ et une longueur totale de 500 m environ.

La couche électriquement isolante a une épaisseur de 3,6 mm.

Les couches semi-conductrices sont des couches réticulées obtenues à partir d'une deuxième composition **I2** suivante :

**TABLEAU 2**

| Deuxième composition | I2 |
|---|---|
| Polymère d'oléfine | 51,69 |
| PEO | 17,16 |
| Noir de carbone | 29,76 |
| Antioxydant | 0,6 |
| Peroxyde organique | 0,79 |
| Total Ingrédients deuxième composition | 100 |

L'origine des composés du tableau 2 est la suivante :

- polymère d'oléfine : polyéthylène basse densité commercialisé par la société INEOS sous la référence 19N430 ;

- PEO : copolymère d'octène et d'éthylène très basse densité commercialisé par la société BOREALIS sous la référence Queo 8203 ;

- noir de carbone conducteur de type « furnace » commercialisé par la société CABOT sous la référence Vulcan XC-500 ;

- antioxydant : 2,2,4-Triméthyl-1,2-dihydroquinoline (TMQ) commercialisé par la société LANXESS sous la référence Vulkanox HS/LG « low salt » ; et

- peroxyde organique : tert-butyl cumyl peroxyde commercialisé par la société NOURYON sous la référence Trigononx T.

On obtient ainsi respectivement les câbles électriques **Cc1** et **Ci1** comprenant chacun trois couches extrudées.

La réticulation des trois couches est réalisée toute de suite après l'extrusion au moyen d'un tube de vulcanisation rempli d'azote sous pression et chauffé à des températures autour de 350°C environ.

Des tests de claquage avant et après vieillissement en milieu humide ont ensuite été effectués.

La méthode utilisée consiste en l'application d'un test de longue durée en milieu humide et sous champs électrique d'une durée de 2 ans, bien connu de l'homme de métier sous le nom « Test CENELEC » selon la norme HD 605, S2:2008, paragraphe 5.4.15.3.

La tension de claquage (en kV/mm) du câble électrique correspond à la tension nécessaire pour former un arc électrique au sein du câble. Elle est typiquement ramenée au champ électrique maximum à l'interface entre la première couche semi-conductrice (ou couche semi-conductrice interne) et la couche électriquement isolante du câble électrique tricouche.

Les résultats des tensions de claquage sont rassemblés dans le tableau 3 ci-après.

**TABLEAU 3**

|  | Câble Cc1 (*) | Câble Ci1 |
|---|---|---|
| **Valeur initiale (kV/mm)** | 46,63 | 60,4 |
| **Valeur après 1 an (kV/mm)** | 27,17 | 45,17 |
| **Valeur après 2 ans (kV/mm)** | 25,00 | 33,5 |
| (*) Câble comparatif ne faisant pas partie de l'invention |  |  |

L'ensemble de ces résultats montre que le câble conforme à l'invention présente une très bonne tenue au vieillissement et une résistance aux arborescences d'eau améliorée.

**Revendications**

1. Câble électrique (1) comprenant au moins un élément électriquement conducteur allongé (2), au moins une couche électriquement isolante (4) entourant ledit élément électriquement conducteur allongé (2), et au moins une couche semi-conductrice (3, 5), **caractérisé en ce que** la couche électriquement isolante (4) est obtenue à partir d'une première composition comprenant au moins un polymère d'oléfine et au moins un polyalkylène glycol, et **en ce que** la couche semi-conductrice (3, 5) est obtenue à partir d'une deuxième composition comprenant au moins un polymère d'oléfine non polaire.

2. Câble électrique (1) selon la revendication 1, **caractérisé en ce que** le polyalkylène glycol est sous la forme solide à température ambiante.

3. Câble électrique (1) selon la revendication 1 ou 2, **caractérisé en ce que** le polyalkylène glycol a un poids moléculaire d'au moins 2000 g/mol.

4. Câble électrique (1) selon l'une quelconque des revendications précédentes, **caractérisé en ce que** la première composition comprend au moins 0,05% en poids de polyalkylène glycol, par rapport au poids total de la première composition.

5. Câble électrique (1) selon l'une quelconque des revendications précédentes, **caractérisé en ce que** le polyalkylène glycol est un polyéthylène glycol.

6. Câble électrique (1) selon l'une quelconque des revendications précédentes, **caractérisé en ce que** la première composition comprend au moins 60% en poids de polymère d'oléfine, par rapport au poids total de la première composition.

7. Câble électrique (1) selon l'une quelconque des revendications précédentes, **caractérisé en ce que** le polymère d'oléfine de la première composition est un homopolymère ou copolymère d'oléfine non polaire.

8. Câble électrique (1) selon l'une quelconque des revendications précédentes, **caractérisé en ce que** le polymère d'oléfine de la première composition est un homopolymère d'éthylène, et de préférence un polyéthylène basse densité.

9. Câble électrique (1) selon la revendication 7 ou 8, **caractérisé en ce que** la première composition comprend en outre un copolymère d'oléfine et d'un co-monomère polaire, ledit co-monomère polaire représentant au moins 1% en poids, par rapport au poids total de polymère(s) dans la première composition.

10. Câble électrique (1) selon l'une quelconque des revendications 1 à 6, **caractérisé en ce que** le polymère d'oléfine est un copolymère d'oléfine et d'un co-monomère polaire, ledit co-monomère polaire représentant au moins 1% en poids, par rapport au poids total dudit copolymère d'oléfine et d'un co-monomère polaire.

11. Câble électrique (1) selon la revendication 9 ou 10, **caractérisé en ce que** le co-monomère polaire est choisi parmi les acrylates, et de préférence les acrylates d'alkyle comprenant de 1 à 10 atomes de carbone.

**12.** Câble électrique (1) selon l'une quelconque des revendications précédentes, **caractérisé en ce que** la couche électriquement isolante (4) est une couche réticulée.

**13.** Câble électrique (1) selon l'une quelconque des revendications précédentes, **caractérisé en ce que** la deuxième composition comprend au moins 60% en poids de polymère(s) non polaire(s), par rapport au poids total de la deuxième composition.

**14.** Câble électrique (1) selon l'une quelconque des revendications précédentes, **caractérisé en ce que** la deuxième composition comprend au moins 6% en poids d'une charge conductrice, par rapport au poids total de la deuxième composition.

**15.** Câble électrique (1) selon l'une quelconque des revendications précédentes, **caractérisé en ce que** la couche électriquement isolante (4) entoure la couche semi-conductrice (3).

**16.** Câble électrique (1) selon l'une quelconque des revendications précédentes, **caractérisé en ce que** la couche semi-conductrice (3, 5) est une couche réticulée.

Fig. 1

**Europäisches Patentamt**

**European Patent Office**

**Office européen des brevets**

# RAPPORT DE RECHERCHE EUROPEENNE

Numéro de la demande

EP 19 21 8500

## DOCUMENTS CONSIDERES COMME PERTINENTS

| Catégorie | Citation du document avec indication, en cas de besoin, des parties pertinentes | Revendication concernée | CLASSEMENT DE LA DEMANDE (IPC) |
|---|---|---|---|
| X | EP 1 042 762 A1 (BOREALIS TECH OY [FI]) 11 octobre 2000 (2000-10-11) * alinéa [0002]; revendications 7,8; exemple * * | 1-16 | INV. H01B7/28 H01B3/44 |
| Y | EP 0 992 041 A1 (UNION CARBIDE CHEM PLASTIC [US]) 12 avril 2000 (2000-04-12) * alinéas [0002], [0029]; revendication 6; exemple * * | 1-16 | |
| Y | FR 2 950 728 A1 (NEXANS [FR]) 1 avril 2011 (2011-04-01) * revendication *; figure 1; exemple * * | 1-16 | |

**DOMAINES TECHNIQUES RECHERCHES (IPC)**

H01B

Le présent rapport a été établi pour toutes les revendications

| Lieu de la recherche | Date d'achèvement de la recherche | Examinateur |
|---|---|---|
| La Haye | 6 mars 2020 | Vanier, Cécile |

## ANNEXE AU RAPPORT DE RECHERCHE EUROPEENNE
## RELATIF A LA DEMANDE DE BREVET EUROPEEN NO.

EP 19 21 8500

La présente annexe indique les membres de la famille de brevets relatifs aux documents brevets cités dans le rapport de recherche européenne visé ci-dessus.
Lesdits members sont contenus au fichier informatique de l'Office européen des brevets à la date du
Les renseignements fournis sont donnés à titre indicatif et n'engagent pas la responsabilité de l'Office européen des brevets.

06-03-2020

| Document brevet cité au rapport de recherche | | Date de publication | Membre(s) de la famille de brevet(s) | | | Date de publication |
|---|---|---|---|---|---|---|
| EP 1042762 | A1 | 11-10-2000 | AT | 361533 | T | 15-05-2007 |
| | | | AU | 731170 | B2 | 22-03-2001 |
| | | | BR | 9813578 | A | 10-10-2000 |
| | | | CN | 1282447 | A | 31-01-2001 |
| | | | DE | 69837723 | T2 | 24-01-2008 |
| | | | EP | 1042762 | A1 | 11-10-2000 |
| | | | TW | 557452 | B | 11-10-2003 |
| | | | WO | 9931675 | A1 | 24-06-1999 |
| EP 0992041 | A1 | 12-04-2000 | AT | 303650 | T | 15-09-2005 |
| | | | AU | 8075098 | A | 04-01-1999 |
| | | | DE | 69831411 | D1 | 06-10-2005 |
| | | | DK | 0992041 | T3 | 16-01-2006 |
| | | | EP | 0992041 | A1 | 12-04-2000 |
| | | | ES | 2248907 | T3 | 16-03-2006 |
| | | | WO | 9859348 | A1 | 30-12-1998 |
| FR 2950728 | A1 | 01-04-2011 | EP | 2483894 | A1 | 08-08-2012 |
| | | | ES | 2455545 | T3 | 16-04-2014 |
| | | | FR | 2950728 | A1 | 01-04-2011 |
| | | | US | 2012227997 | A1 | 13-09-2012 |
| | | | WO | 2011039474 | A1 | 07-04-2011 |

EPO FORM P0460

Pour tout renseignement concernant cette annexe : voir Journal Officiel de l'Office européen des brevets, No.12/82

EP 3 671 768 A1

**RÉFÉRENCES CITÉES DANS LA DESCRIPTION**

*Cette liste de références citées par le demandeur vise uniquement à aider le lecteur et ne fait pas partie du document de brevet européen. Même si le plus grand soin a été accordé à sa conception, des erreurs ou des omissions ne peuvent être exclues et l'OEB décline toute responsabilité à cet égard.*

**Documents brevets cités dans la description**

- EP 0223180 A1

17